# EUROPÄISCHE PATENTSCHRIFT

(11) **EP 0 635 097 B1**
(45) Veröffentlichungstag und Bekanntmachung des Hinweises auf die Patenterteilung: **13.09.1995**
(21) Anmeldenummer: 93921728.7
(22) Anmeldetag: 18.03.1993
(51) Int. Cl.: F01N 3/28, B01J 35/04

(54) **KONISCHER WABENKÖRPER**
CONICAL HONEYCOMBED BODY
CORPS CONIQUE EN NID D'ABEILLES

(30) Priorität: 03.04.1992 DE 4211275
(43) Veröffentlichungstag der Anmeldung: 25.01.1995
(73) Patentinhaber: Emitec Gesellschaft für Emissionstechnologie mbH, 53797 Lohmar (DE)
(72) Erfinder: Brück, Rolf, D-5060 Bergisch Gladbach 1 (DE)
(74) Vertreter: Kahlhöfer, Hermann, Dipl.-Phys.
(86) Internationale Anmeldenummer: EP9300639
(87) Internationale Veröffentlichungsnummer: WO9320339

(56) Entgegenhaltungen:
- DE-A- 3 719 773
- DE-A- 4 104 637
- US-A- 4 513 807

## Beschreibung

Die Erfindung betrifft einen Wabenkörper mit einer Achse und einem Mantelrohr, in welches eine Anordnung aus zumindest einem nach Art einer Evolvente um die Achse geschlungenen Stapel eingepaßt ist, welcher Stapel eine Vielzahl aufeinandergeschichteter Bleche, worin eine Mehrzahl strukturierter Bleche inbegriffen ist, aufweist.

Die Erfindung bezieht sich insbesondere auf Wabenkörper zur Verwendung als Träger für einen Katalysator zur Bewirkung einer katalytischen Reaktion in einem den Wabenkörper durchströmenden Fluid. Solche Verwendung erfolgt insbesondere im Abgassystem einer beispielsweise ein Kraftfahrzeug antreibenden Brennkraftmaschine, wobei das Fluid ein Abgas der Brennkraftmaschine ist, in dem durch den Katalysator Reaktionen zur Umwandlung von Schadstoffen in unbedenkliche Stoffe bewirkt werden sollen.

Ein metallischer Wabenkörper, der als Katalysator-Trägerkörper geeignet ist und evolventenartig verlaufende Schichten aufweist, welche aus glatten und gewellten Blechen gebildet sind, ist in der EP 0 245 736 B1 beschrieben. Eine Weiterbildung eines solchen Wabenkörpers geht aus der EP 0 245 737 B1 hervor. Dort ist beschrieben, zur Bildung des Wabenkörpers die Enden eines aus aufeinandergeschichteten glatten und gewellten Blechen gebildeten Stapels S-förmig um eine Achse zu schlingen, wodurch zwei umeinandergewundene, etwa evolventenförmig angeordnete Strukturen entstehen. Eine andere Weiterbildung des Wabenkörpers mit evolventenartig ausgerichteten Schichten geht aus der WO 90/03220 A1 hervor; in dieser Schrift werden Stapel aus teilweise strukturierten Blechen, die um eine Knicklinie gefaltet sind, umeinander und um eine parallel zu den Knicklinien ausgerichtete Achse gewunden. Die in den drei erwähnten Schriften beschriebenen Wabenkörper sind insbesondere verwendbar als Träger für Katalysatoren in Abgassystemen von Kraftfahrzeugen; weitere Einzelheiten gehen aus den Schriften hervor.

Zur Erzielung einer ausreichenden Wirksamkeit der Katalysatoren auf Wabenkörpern in Abgassystemen von Kraftfahrzeugen reichen Wabenkörper, deren Querschnitte gleich den Querschnitten der Abgasrohre sind, durch welche die Abgase von den Brennkraftmaschinen den Wabenkörpern zugeführt oder von den Wabenkörpern abgeführt werden, in der Regel nicht aus. Dementsprechend müssen in den Abgassystemen von Kraftfahrzeugen vor Wabenkörpern Diffusoren und hinter Wabenkörpern Konfusoren vorgesehen werden, um die Querschnitte von Abgasleitungen und Wabenkörpern aneinander anzupassen. Einzelheiten hierzu gehen aus der EP 0 386 013 B1 hervor. In dieser Schrift ist auch die Problematik einer gleichmäßigen Anströmung eines einen Katalysator tragenden Wabenkörpers ausführlich erläutert. Um diese Anströmung zu verbessern, soll im Diffusor vor und/oder im Konfusor hinter einem Wabenkörper ein der Form des Diffusors oder Konfusors angepaßter, im allgemeinen also konischer, Strömungsleitkörper eingefügt werden. Dieser Strömungsleitkörper ist u. U. selbst ein Wabenkörper und kann beispielsweise gebildet sein durch spiraliges Aufwickeln eines gewellten und geschlitzten Bleches zusammen mit einem glatten Blech. Andere beschriebene Möglichkeiten zur Bildung des konischen Wabenkörpers laufen auf seine Zusammensetzung aus einer Vielzahl gleichartiger, konischer, röhrenartiger Elemente hinaus. Der in erster Linie als Strömungsleitkörper dienende konische Wabenkörper kann darüber hinaus eine eigene katalytisch wirksame Beschichtung erhalten, um so neben dem zylindrischen Wabenkörper, dessen Katalysator nach wie vor die Hauptlast der katalytischen Umsetzung tragen soll, als "Vorkatalysator" zu dienen. Da der Strömungsleitkörper in der Regel wesentlich weniger Masse hat als der zylindrische Wabenkörper, heizt er sich bei Betriebsbeginn schneller auf, und ein auf ihm befindlicher Katalysator kann innerhalb einer besonders kurzen Zeitspanne wirksam werden.

Gemäß der DE 23 13 040 C3 kann ein leicht konischer Wabenkörper gebildet werden durch Pressung einer an sich zylindrischen, aus glatten und gewellten Blechen geschichteten Struktur.

Die Schriften WO 90/08249 A1, EP 0 298 943 A2, WO 91/01178 A1, WO 91/01807 A1 und EP 0 136 515 B1 betreffen die Bildung von Mikrostrukturen in Blechen, aus denen Wabenkörper gebildet werden sollen. Die Mikrostrukturen sind beispielsweise Rillen, Sicken, Noppen, Nuten oder kleine aus den Blechen herausragende Flächenstücke; sie sind im allgemeinen deutlich kleiner als die Wellen, die nach fachmännischem Verständnis in "gewellte" Bleche zur Herstellung von Wabenkörpern eingebracht sind. Die Mikrostrukturen dienen verschiedenen Zwecken; sie können zur Verbesserung der Festigkeit eines Wabenkörpers beitragen, wenn dieser so aufgebaut ist, daß solche Mikrostrukturen ineinandergreifen. Die Mikrostrukturen können auch und gegebenenfalls zusätzlich zu der vorgenannten Funktion zur Beeinflussung des Strömungsverhaltens eines den Wabenkörper durchsetzenden Fluides dienen.

Aus der DE 39 03 879 A1 geht ein metallischer Wabenkörper hervor, der im geschlossenen Gaskreislauf eines Lasers angeordnet ist und bestimmte katalytische Reaktionen in dem für den Betrieb des Lasers erforderlichen Gas auslösen soll, und der elektrisch beheizbar ist.

Elektrisch beheizbare Wabenkörper sind auch in den Abgassystemen von Kraftfahrzeugen verwendbar; dies geht beispielsweise aus der WO 90/12951 A1 hervor, wo darüber hinaus eine weitere Funktion von Mikrostrukturen in Blechen, aus denen ein elektrisch beheizbarer Wabenkörper aufgebaut ist, beschrieben ist. Die Mikrostrukturen dienen zur formschlüssigen Verbindung zweier Bleche, zwischen denen eine elektrisch isolierende Zwischenschicht aus Keramik oder dergleichen eingefügt ist.

Aus DE-A-3 719 773 ist ein Trägerkörper für einen katalytischen Reaktor zur Abgasreinigung bekannt, der kegelig ausgebildet ist, und dem eine ebenfalls kegelige Mantelhülse zugeordnet ist.

Der Erfindung liegt folgende Aufgabe zugrunde: Es soll ein einfach aufgebauter und leicht herstellbarer konischer Wabenkörper angegeben werden, der beispielsweise in einen einem üblichen, axial geraden Wabenkörper zugeordneten Diffusor oder Konfusor einfügbar ist und der, mit einem Katalysator beschichtet, als Vorkatalysator für einen üblichen Wabenkörper mit Katalysatorbeschichtung dienen kann.

Erfindungsgemäß wird ein Wabenkörper angegeben, der eine Achse und ein bezüglich dieser konisches Mantelrohr aufweist, in welches Mantelrohr eine Anordnung aus zumindest einem nach Art einer Evolvente um die Achse geschlungenen Stapel eingepaßt ist, welcher Stapel eine Vielzahl aufeinandergeschichteter Bleche, worin eine Mehrzahl gewellter Bleche inbegriffen ist, aufweist, welches jedes Blech nach Art eines Kreisringsegmentes geformt ist, so daß es von einem bezüglich eines Mittelpunktes etwa kreisförmigen äußeren Bogen und einem zu diesem konzentrischen, zwischen diesem und dem Mittelpunkt liegenden, etwa kreisförmigen inneren Bogen begrenzt ist, und wobei jedes gewellte Blech Wellen hat, deren jede bezüglich des Mittelpunktes etwa radial ausgerichtet ist und an jedem Bogen eine zugeordnete Wellhöhe hat, wobei die Bögen Längen haben, deren Verhältnis etwa gleich dem Verhältnis der jeweiligen zugeordneten Wellhöhen ist.

Der erfindungsgemäße Wabenkörper ist u. a. dadurch gekennzeichnet, daß er aus zumindest einem Stapel von Blechen gebildet ist, so daß es zu seiner Herstellung keiner spiraligen Aufwicklung kompliziert geformter und möglicherweise geschlitzter Bleche mehr bedarf. Eine solche spiralige Wicklung eines konischen Körpers ist schwierig, da die zu einem kegeligen Körper aufzuwickelnden Bleche nicht mehr gerade sein können, sondern gebogen sein müssen und sich dabei womöglich vielfach selbst überlappen. Dementsprechend haben aufgrund der komplizierten Herstellungstechnik bisher konische Wabenkörper praktisch keine technische Bedeutung erlangen können. Dadurch, daß erfindungsgemäß ein aus einer Vielzahl von Blechen geschichteter Stapel zur Herstellung des Wabenkörpers gebildet wird, wird das Problem der Herstellung beträchtlich vereinfacht. Die zur Bildung des Stapels bereitzustellenden Bleche sind relativ kurz und können kostengünstig und unter Bildung von nur wenig Abfall aus größeren Blechtafeln geschnitten oder gestanzt werden. Der erfindungsgemäße Wabenkörper kann darüber hinaus so ausgeführt werden, daß jedes Blech mit zumindest einem Ende an das Mantelrohr stößt und an diesem befestigt, beispielsweise angelötet, ist. Dies ist für einen Wabenkörper von konischer Form besonders wichtig, da die in dem verbundenen Blechstapel zurückbleibenden Spannungen zu einem gewissen Maß den Blechstapel aus dem konischen Mantelrohr herausdrücken. Dieser Neigung kann allerdings durch individuelle Verbindung jedes Bleches mit dem Mantelrohr einfach und ausreichend begegnet werden.

Um einen konischen Wabenkörper mit senkrecht zu der Achse orientierten Stirnflächen zu bauen, welche Stirnflächen im wesentlichen eben sind, muß die Form jedes Bleches von der Idealform eines Kreisringsegmentes leicht abweichen; da die Bleche in der Nähe der Achse des Wabenkörpers weniger geneigt sind als in der Nähe des Mantelrohres, müssen die in der Nähe der Achse zu liegen kommenden Bereiche der Bleche eine etwas geringere Breite haben als die Bereiche, die in der Nähe des Mantelrohres zu liegen kommen. Werden Bleche verwendet, deren Form im wesentlichen der Idealform eines Kreisringsegmentes entspricht, so entsteht ein Wabenkörper mit leicht nach außen gewölbten Stirnflächen. Es versteht sich, daß die Erfindung sowohl Wabenkörper mit im. wesentlichen ebenen als auch Wabenkörper mit leicht gewölbten Stirnflächen einschließt.

Die Wellung eines erfindungsgemäß zu verwendenden gewellten Bleches kann nicht eine über das gesamte Blech konstante Wellhöhe haben, sondern die Wellhöhe muß sich ausgehend von einer kleineren Wellhöhe an dem kleineren, das Blech begrenzenden Bogen zu einer größeren Wellhöhe an dem größeren, das Blech begrenzenden Bogen vergrößern. Dabei muß das Verhältnis der Wellhöhen etwa dem Verhältnis der Längen der Bögen entsprechen, damit bei der Verschlingung des Bleches ein etwa konischer Wabenkörper entsteht. Die Wellhöhe ändert sich von dem kleineren Bogen zu dem größeren Bogen vorteilhafterweise stetig, vorzugsweise linear - eine solche Wellung ist für die Bildung eines konischen Wabenkörpers besonders geeignet. Es ist nicht unbedingt erforderlich, ein Blech zusätzlich zu der Wellung mit Schlitzen zu versehen, wie dies in der EP 0 386 013 B1 erläutert ist; zur Bildung einer wie vorstehend beschrieben strukturierten Wellung kann ein vorher glattes und gegebenenfalls nach Art eines Kreisringes geformtes Blech zwischen zwei konischen Wellwalzen die Wellung erhalten.

Günstig ist es, in dem erfindungsgemäßen Wabenkörper gewellte Bleche zu verwenden, bei denen jede Welle an einem äußeren Bogen in eine einzige Welle an dem jeweiligen inneren Bogen übergeht. Im Rahmen dieser Ausgestaltung ist es möglich, ein gewelltes Blech herzustellen, das einem Segment eines gegebenen Kreisringes entspricht, indem ein glattes Blech, das ein entsprechend längeres Segment desselben Kreisringes ist, gewellt wird; hierbei gehen die Wellhöhen am inneren und äußeren Bogen im wesentlichen linear ineinander über. Hieraus resultiert ein beträchtlicher Vorteil bei der Herstellung, da nur noch Bleche in Form von Segmenten eines einzigen Kreisringes erforderlich sind.

Im Rahmen einer anderen vorteilhaften Weiterbildung des Wabenkörpers geht bei jedem gewellten Blech jede Welle an dem äußeren Bogen in eine Mehrzahl von Wellen an dem inneren Bogen über - dies günstiger-weise derart, daß eine einzige Welle an dem äußeren Bogen sich aufspaltet in eine Mehrzahl von Wellen, insbesondere zwei bis drei Wellen, an dem inneren Bogen. Ein solcherart gewelltes Blech kann, bei geeigneter Wahl der zu bildenden Konusform und der Zahl der Wellen am inneren Bogen, in die eine einzige Welle am äußeren Bogen übergeht, aus einem geraden Blech gebildet werden, indem dieses gerade Blech zwischen zwei entsprechend strukturierten, konischen Wellwalzen gewellt wird. Der sich hieraus ergebende Vorteil liegt im wesentlichen darin, daß sowohl glatte Bleche als auch gewellte Bleche zur Bildung des Wabenkörpers jeweils in einem einzigen Arbeitsgang herstellbar sind - die glatten Bleche können aus größeren Blechtafeln ausgeschnitten oder ausgestanzt werden, die gewellten Bleche werden durch entsprechende Wellung eines geraden Blechbandes hergestellt, welches gerade Blechband bekanntermaßen in praktisch beliebiger Länge bereitstellbar ist.

Eine andere vorteilhafte Weiterbildung des Wabenkörpers, die gegebenenfalls zu weiteren Ausgestaltungen hinzutreten kann, ist das Vorsehen von ineinandergreifenden Mikrostrukturen in den den Wabenkörper bildenden glatten und gewellten Blechen. Solche Mikrostrukturen können winklig, vorzugsweise etwa senkrecht, zur Achse ausgerichtete Rillen sein, in die Rillen, Noppen oder andere Mikrostrukturen in benachbarten Blechen eingreifen. Die Mikrostrukturen geben dem Wabenkörper schon vor einem in der Regel durchgeführten Lötprozeß zur Verbindung der Bleche untereinander und/oder mit dem Mantelrohr eine gewisse Formstabilität und verringern die Möglichkeit, daß die verschlungene Anordnung der Bleche aus dem konischen Mantelrohr herausspringt. Bei einer Verlötung oder dergleichen können die Mikrostrukturen auch als Ankerstellen für Lot dienen und somit das Entstehen von besonders hoch belastbaren Lötstellen in dem Wabenkörper begünstigen; darüber hinaus können die Mikrostrukturen eine den Wabenkörper durchsetzende Strömung eines Fluides günstig beeinflussen und außerdem, in einem für eine elektrische Beheizung ausgelegten Wabenkörper, Formschlußverbindungen zwischen Blechen und keramischen Isolierschichten oder dergleichen bilden.

Die mechanische Festigkeit eines konischen Wabenkörpers nach der Erfindung kann, unbeschadet anderweitiger Maßnahmen, weiter verbessert werden durch das Vorsehen einer Haltestruktur an dem Mantelrohr, wobei das Mantelrohr an die größere der beiden etwa senkrecht zu der Achse orientierten Endflächen des Wabenkörpers heranreicht und die Haltestruktur auf der ersten Endfläche aufliegt. Diese Haltestruktur kann die verschlungene Anordnung der Bleche in dem konischen Mantelrohr halten und ein Herausspringen verhindern; dies insbesondere in Abwesenheit von Formschlußverbindungen wie z. B. Lötstellen zwischen den Blechen und dem Mantelrohr. Die Haltestruktur kann eine an dem Mantelrohr angebrachte, vorzugsweise das Mantelrohr vollständig umringende Lippe sein; eine solche Lippe kann beispielsweise durch Umbördeln des Mantelrohrs gebildet werden, sie kann aber auch ein angeschweißtes, separates Bauteil sein. Eine andere Möglichkeit für die Haltestruktur ist ein mit dem Mantelrohr stoffschlüssig verbundener, insbesondere verschweißter, die Endfläche überragender Bügel. Ein solcher Bügel ist vorteilhafterweise auf der Endfläche zentriert angeordnet, so daß er ihren Mittelpunkt berührt.

Der erfindungsgemäße Wabenkörper jedweder Ausgestaltung ist besonders geeignet als Träger für einen Katalysator zur Bewirkung einer katalytischen Reaktion in einem ihn durchströmenden Fluid; hierfür kann er insbesondere im Abgassystem eines Kraftfahrzeuges eingesetzt sein, so daß er von dem Abgas einer Brennkraftmaschine durchströmt wird und in diesem katalytische Reaktionen zur Beseitigung von Schadstoffen auslösen kann. Der erfindungsgemäße Wabenkörper eignet sich insbesondere als "Vorkatalysator" für einen Wabenkörper bekannter Art, wobei er in einem Diffusor des Abgassystems unmittelbar vor dem bekannten Wabenkörper angeordnet ist.

Die weitere Erläuterung der Erfindung erfolgt anhand der in der Zeichnung dargestellten Ausführungsbeispiele. In den Figuren der Zeichnung sind Bestandteile, die gleiche Funktionen erfüllen, jeweils mit demselben Bezugszeichen versehen. Zum Zwecke der Herausstellung spezifischer Merkmale der Erfindung ist die Zeichnung teilweise schematisiert und/oder leicht verzerrt ausgeführt. Im einzelnen zeigen:
Figur 1 eine Ansicht eines konischen Wabenkörpers gemäß der Erfindung;
Figur 2 ein glattes Blech zur Bildung des Wabenkörpers;
Figur 3, Figur 4 und Figur 5 Ausschnitte aus gewellten Blechen zur erfindungsgemäßen Verwendung;
Figur 6 Bleche mit ineinandergreifenden Mikrostrukturen;
Figur 7 eine Ansicht eines konischen Wabenkörpers mit zusätzlicher Haltestruktur;
Figur 8 einen Längsschnitt durch einen weiteren erfindungsgemäßen Wabenkörper mit zusätzlicher Haltestruktur.

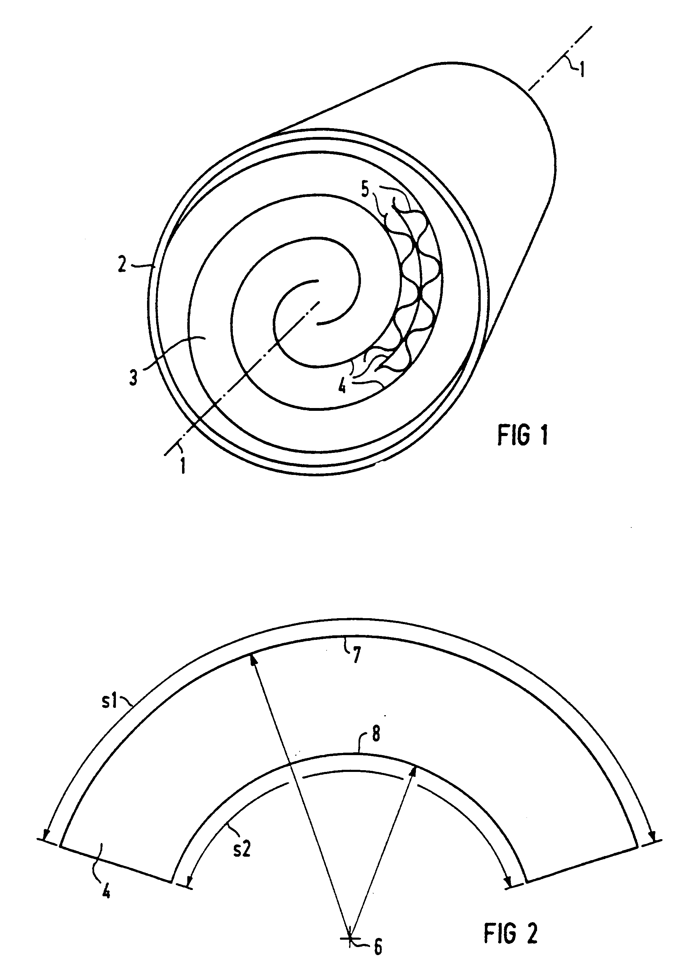

Figur 1 zeigt einen erfindungsgemäßen Wabenkörper. Dieser Wabenkörper ist bezüglich der Achse 1 konisch und weist einen in ein konisches Mantelrohr 2 eingepaßten, S-förmig verschlungenen Stapel 3 auf. Dieser Stapel 3 besteht aus glatten Blechen 4 und gewellten Blechen 5. Die Zahl der dargestellten Bleche 4, 5 ist keineswegs repräsentativ für besonders vorteilhafte Ausbildungen; zur Herstellung eines Wabenkörpers mit einem S-förmig verschlungenen Stapel 3, sowie allgemein zu Wabenkörpern mit zumindest einem Stapel 3, welcher nach Art einer Evolvente verschlungen ist, wird ausdrücklich auf den oben näher zitierten Stand der Technik verwiesen.

Figur 2 zeigt beispielhaft ein eben ausgebreitetes glattes Blech 4, mit dem ein Wabenkörper gemäß der Erfindung hergestellt werden kann. Das Blech 4 hat die Gestalt eines Kreisringsegmentes und ist begrenzt von einem äußeren Bogen 7 mit einer Länge s1 und einem, bezüglich seines Mittelpunktes 6 zu dem äußeren Bogen 7 konzentrischen, inneren Bogen 8. Damit entspricht das dargestellte Blech 4 der Abwicklung eines Kegelmantels in die Ebene. Durch Verschlingung dieses Bleches 4 zusammen mit anderen Blechen kann dementsprechend ein konischer Wabenkörper erhalten werden.

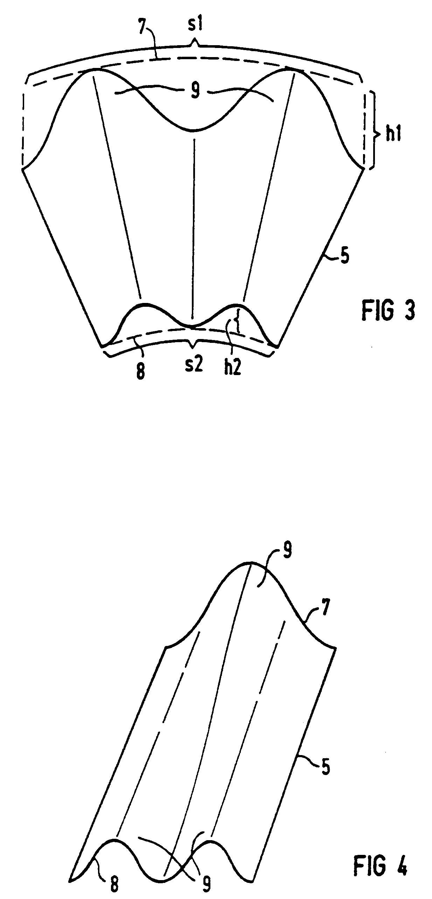

Die Figuren 3, 4 und 5 zeigen Ausschnitte aus gewellten Blechen 5 zur Bildung erfindungsgemäßer Wabenkörper. Das Blech gemäß Figur 3 weist Wellen 9 auf, wobei jede Welle 9 am äußeren Bogen 7 in eine einzige Welle 9 an dem inneren Bogen 8 übergeht. Ein solches Blech 5 weist Vorteile dahingehend auf, daß es aus einem glatten Blech durch Wellen zwischen entsprechenden, konischen Wellwalzen oder durch Tiefziehen gebildet werden kann, wobei das glatte Blech ein Segment desselben Kreisringes ist, aus dem das gewellte Blech 5 ein Segment darstellt. In Figur 3 eingezeichnet sind neben den Längen s1 und s2 des äußeren Bogens 7 bzw. des inneren Bogens 8 auch die Wellhöhen h1, h2 am äußeren Bogen 7 bzw. am inneren Bogen 8. Wie bereits ausgeführt, muß die Wellhöhe h1 am äußeren Bogen 7 größer sein als die Wellhöhe h2 am inneren Bogen 8, entsprechend dem Verhältnis zwischen der Länge s1 des äußeren Bogens 7 und der Länge s2 des inneren Bogens 8.

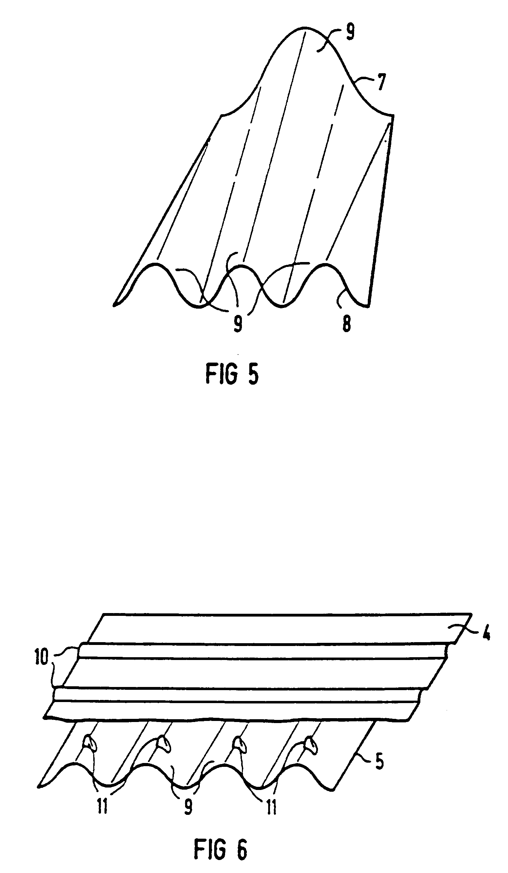

Figur 4 und Figur 5 zeigen Varianten gewellter Bleche 5; gemäß Figur 4 geht eine Welle 9 am äußeren Bogen 7 über in zwei Wellen 9 am inneren Bogen 8; gemäß Figur 5 entstehen aus einer einzigen Welle 9 am äußeren Bogen 7 drei Wellen 9 am inneren Bogen 8. Solcherart strukturierte gewellte Bleche 5 sind, bei geeigneter Wahl der Größenverhältnisse des zu bildenden Wabenkörpers, u. U. durch Wellung gerader glatter Bleche zwischen geeignet strukturierten, konischen Wellwalzen herstellbar. Damit können zur Bildung dieser gewellten Bleche 5 gerade Bleche verwendet werden, wie sie, aufgewickelt auf großen Trommeln, handelsüblich sind.

Figur 6 zeigt das Zusammenwirken von Mikrostrukturen 10, 11, um ein glattes Blech 4 an einem gewellten Blech 5 zu fixieren. Das glatte Blech 4 weist Rillen 10 auf, die etwa senkrecht zu den Wellen 9 des gewellten Bleches 5 ausgerichtet sind. Das gewellte Blech 5 ist versehen mit Noppen 11, die in die Rillen 10 des glatten Bleches 4 eingreifen und somit die beiden Bleche 4, 5 zu einem gewissen Maß aneinander fixieren können. Anstelle der Noppen 11 kann das gewellte Blech 5 ebenso wie das glatte Blech 4 mit Rillen 10 versehen werden; Beispiele hierfür sind dem oben zitierten Stand der Technik entnehmbar.

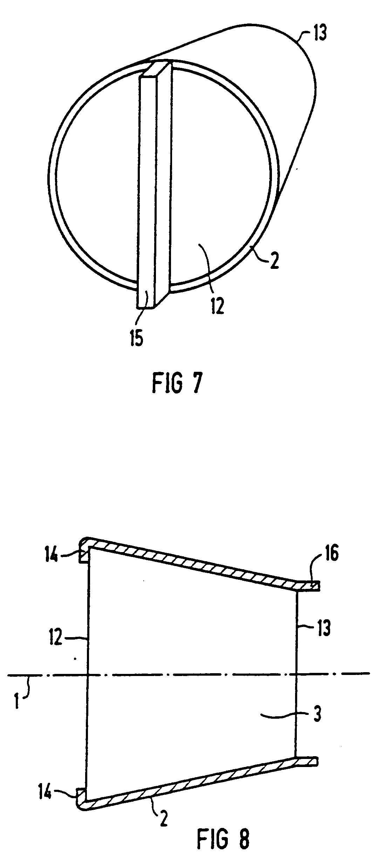

Figur 7 zeigt, wie ein erfindungsgemäßer konischer Wabenkörper durch eine zusätzliche Haltestruktur stabilisiert werden kann. Der von dem Mantelrohr 2 umfaßte konische Wabenkörper weist zwei im wesentlichen ebene Endflächen 12 und 13 auf, wobei eine erste Endfläche 12 größer ist als eine zweite Endfläche 13 und beide Endflächen 12, 13 etwa senkrecht zu dem konischen Mantelrohr 2 orientiert sind. Um den verschlungenen Stapel (der aus Klarheitsgründen in Figur 7 nicht dargestellt ist) in dem Mantelrohr 2 zu halten, ist über die erste Endfläche 12 ein Bügel 15 gelegt, der an zwei einander gegenüberliegenden Stellen mit dem Mantelrohr 2 verbunden, insbesondere verschweißt, ist. So verhindert der Bügel 15 ein Herausspringen des Stapels aus dem Mantelrohr 2.

Figur 8 zeigt ein weiteres Ausführungsbeispiel für eine zusätzliche Haltestruktur an einem konischen Wabenkörper. Dargestellt ist ein Längsschnitt parallel zur Achse 1. Die Anordnung mit einem Stapel 3 ist, in Richtung der Achse 1 gesehen, begrenzt von einer größeren ersten Endfläche 12 und einer kleineren Endfläche 13. Der Stapel 3 befindet sich in einem Mantelrohr 2. Zur Fixierung des Stapels 3 weist das Mantelrohr 2 an der ersten Endfläche 12 eine auf dieser aufliegende, die Achse 1 umringende Lippe 14 auf. Diese Lippe 14 kann eine einfache Umbördelung des Mantelrohrs 2 oder ein zusätzliches Bauteil, das auf das Mantelrohr 2 aufgeschweißt ist, sein. Da die in das Mantelrohr 2 einzubringende Anordnung vor der Bildung von Formschlußverbindungen darin eine gewisse Elastizität hat, kann sie, leicht zusammengepreßt, an der Lippe 14 vorbei in das Mantelrohr 2 eingeführt werden und hintergreift, wenn sie vollständig eingeführt ist, die Lippe 14, welche somit ein Herausspringen aus dem Mantelrohr 2 verhindert. An der zweiten Endfläche 13 läuft das Mantelrohr 2 in einen axialen Flansch 16 aus, an dem je nach Bedarf ein weiteres Rohr befestigbar, beispielsweise anschweißbar, ist.

Der erfindungsgemäße konische Wabenkörper ist einfach aufgebaut und leicht herstellbar und eignet sich eingefügt in einen einem üblichen, axial geraden Wabenkörper zugeordneten Diffusor, insbesondere als "Vorkatalysator".

## Patentansprüche

1. Wabenkörper mit einer Achse (1) und einem bezüglich dieser konischen Mantelrohr (2), dadurch gekennzeichnet, daß darin eine Anordnung aus zumindest einem nach Art einer Evolvente um die Achse (1) geschlungenen Stapel (3) eingepaßt ist, welcher Stapel (3) eine Vielzahl aufeinandergeschichteter Bleche (4, 5), worin eine Mehrzahl gewellter Bleche (5) inbegriffen ist, aufweist, welches jedes Blech (4, 5) nach Art eines Kreisringsegmentes geformt ist, so daß es von einem bezüglich eines Mittelpunktes (6) etwa kreisförmigen äußeren Bogen (7) und einem zu diesem konzentrischen, zwischen diesem und dem Mittelpunkt (6) liegenden, etwa kreisförmigen inneren Bogen (8) begrenzt ist, und welches jedes gewelltes Blech (5) Wellen (9) hat, deren jede bezüglich des Mittelpunktes (6) etwa radial ausgerichtet ist und an jedem Bogen (7, 8) eine zugeordnete Wellhöhe (h1, h2) hat, wobei die Bögen (7, 8) Längen (s1, s2) haben, deren Verhältnis etwa gleich dem Verhältnis der jeweiligen zugeordneten Wellhöhen (h1, h2) ist.

2. Wabenkörper nach Anspruch 1, bei dem bei jedem gewellten Blech (5) die Wellhöhen (h1, h2) der Wellen (9) stetig, vorzugsweise linear, ineinander übergehen.

3. Wabenkörper nach Anspruch 1 oder 2, bei dem jede Welle (9) an dem äußeren Bogen (7) in eine einzige Welle (9) an dem inneren Bogen (8) übergeht.

4. Wabenkörper nach Anspruch 1 oder 2, bei dem jede Welle (9) an dem äußeren Bogen (7) in eine Mehrzahl von Wellen (9) an dem inneren Bogen (8) übergeht.

5. Wabenkörper nach einem der vorhergehenden Ansprüche, bei dem die Bleche (4, 5) ineinandergreifende Mikrostrukturen (10, 11) aufweisen.

6. Wabenkörper nach Anspruch 5, bei dem die Mikrostrukturen (10, 11) zumindest zum Teil aus winklig, vorzugsweise etwa senkrecht, zur Achse (1) ausgerichteten Rillen (10) bestehen, in welche Rillen (10) andere Rillen (10) und/oder Noppen (11) eingreifen.

7. Wabenkörper nach einem der vorhergehenden Ansprüche, der zwei etwa senkrecht zu der Achse (1) orientierte Endflächen (12, 13) hat, deren erste (12) größer als deren zweite (13) ist, wobei das Mantelrohr (2) an die erste Endfläche (12) heranreicht und zumindest eine auf der ersten Endfläche (12) aufliegende Haltestruktur (14, 15) aufweist.

8. Wabenkörper nach Anspruch 7, bei dem die Haltestruktur (14, 15) eine Lippe (14) an dem Mantelrohr (2) ist, welche vorzugsweise das Mantelrohr (2) vollständig umringt.

9. Wabenkörper nach Anspruch 7 oder 8, bei dem die Haltestruktur (14, 15) ein mit dem Mantelrohr (2) stoffschlüssig verbundener, insbesondere verschweißter, vorzugsweise auf der ersten Endfläche (12) zentriert angeordneter, Bügel (15) ist.

10. Verwendung eines Wabenkörpers nach einem der vorhergehenden Ansprüche als Träger für einen Katalysator zur Bewirkung einer katalytischen Reaktion in einem den Wabenkörper durchströmenden Fluid.

## Claims

1. A honeycomb body having an axis (1) and a casing tube (2) which is conical with respect thereto, characterised in that fitted therein is an arrangement comprising at least one stack (3) which is wound around the axis (1) in the manner of an involute, which stack (3) has a multiplicity of sheets (4, 5) which are laid one upon the other, a majority of corrugated sheets (5) being included therein, each sheet (4, 5) being formed in the manner of a segment of a circular ring so that it is defined by an outer arc (7) which is approximately circular with respect to a centre point (6) and an approximately circular inner arc (8) which is concentric with respect to the outer arc and which is disposed between same and the centre point (6), and each corrugated sheet (5) having corrugations (9), each of which is oriented approximately radially with respect to the centre point (6) and has at each arc (7, 8) an associated corrugation height (h1, h2), wherein the arcs (7, 8) are of lengths (s1, s2) whose ratio is approximately equal to the ratio of the respective associated corrugation heights (h1, h2).

2. A honeycomb body according to claim 1 wherein in each corrugated sheet (5) the corrugation heights (h1, h2) of the corrugations (9) merge into each other steadily and preferably linearly.

3. A honeycomb body according to claim 1 or claim 2 wherein each corrugation (9) at the outer arc (7) goes into a single corrugation (9) at the inner arc (8).

4. A honeycomb body according to claim 1 or claim 2 wherein each corrugation (9) at the outer arc (7) goes into a multiplicity of corrugations (9) at the inner arc (8).

5. A honeycomb body according to one of the preceding claims wherein the sheets (4, 5) have interengaging microstructures (10, 11).

6. A honeycomb body according to claim 5 wherein the microstructures (10, 11) at least in part comprise grooves (10) which are oriented at an angle, preferably approximately perpendicularly, with respect to the axis (1), into which grooves (10) engage other grooves (10) and/or knobs (11).

7. A honeycomb body according to one of the preceding claims which has two end surfaces (12, 13) which are oriented approximately perpendicularly to the axis (1) and of which the first (12) is larger than the second (13), wherein the casing tube (2) extends to the first end surface (12) and has at least one holding structure (14, 15) which lies against the first end surface (12).

8. A honeycomb body according to claim 7 wherein the holding structure (14, 15) is a lip (14) on the casing tube (2), the lip preferably completely extending around the casing tube (2).

9. A honeycomb body according to claim 7 or claim 8 wherein the holding structure (14, 15) is a strap member (15) which is connected to the casing tube (2) fixedly in respect of the materials involved, in particular by welding, and which is preferably arranged centered on the first end surface (12).

10. Use of a honeycomb body according to one of the preceding claims as a carrier for a catalyst for producing a catalytic reaction in a fluid flowing through the honeycomb body.

## Revendications

1. Corps alvéolaire comportant un axe (1) et un tube de protection (2) qui est conique par rapport à cet axe, caractérisé en ce qu'il y est inséré un dispositif constitué d'un empilement (3) enroulé autour de l'axe (1) sous la forme d'une développante, lequel empilement (3) comporte une pluralité de tôles (4, 5) empilées les unes sur les autres, comprenant une majorité de tôles ondulées (5), chacune de ces tôles (4, 5) étant formée à la manière d'un segment d'anneau circulaire de sorte que, par rapport à un point central (6), elle est délimitée par une courbe extérieure (7) approximativement circulaire et par une courbe intérieure (8) approximativement circulaire qui est concentrique à cette courbe extérieure, et est située entre cette dernière et le point central (6), en ce que chacune de ces tôles ondulées (5) comporte des ondulations (9) dont chacune est orientée à peu près radialement par rapport au point central (6), et en ce que chaque courbe (7, 8) possède une hauteur d'ondulation associée (h1, h2), les courbes (7, 8) ayant des longueurs (s1, s2) dont le rapport est approximativement identique au rapport des hauteurs d'ondulation (h1, h2) respectivement associées.

2. Corps alvéolaire selon la revendication 1, dans lequel les hauteurs d'ondulation (h1, h2) des ondulations (9) de chaque tôle ondulée (5) se transforment en continu les unes dans les autres, de préférence de façon linéaire.

3. Corps alvéolaire selon l'une des revendications 1 ou 2, dans lequel chaque ondulation (9) au niveau de la courbe extérieure (7) se transforme en une seule ondulation (9) au niveau de la courbe intérieure (8).

4. Corps alvéolaire selon l'une des revendications 1 ou 2, dans lequel chaque ondulation (9) au niveau de la courbe extérieure (7) se transforme en plusieurs ondulations (9) au niveau de la courbe intérieure (8).

5. Corps alvéolaire selon l'une quelconque des revendications précédentes, dans lequel les tôles (4, 5) comportent des microstructures imbriquées les unes dans les autres (10, 11).

6. Corps alvéolaire selon la revendication 5, dans lequel les microstructures (10, 11) sont constituées, au moins en partie, de rainures (10) orientées angulairement par rapport à l'axe (1), de préférence à peu près perpendiculairement, dans lesquelles rainures (10) s'imbriquent d'autres rainures (10) et/ou des noppes (11).

7. Corps alvéolaire selon l'une quelconque des revendications précédentes, qui comporte deux surfaces d'extrémité (12, 13) orientées à peu près perpendiculairement à l'axe (1), dont la première (12) est plus grande que la seconde (13), le tube de protection (2) s'étendant jusqu'à la première surface d'extrémité (12) et comportant au moins une structure de support (14, 15) qui prend appui sur la première surface d'extrémité (12).

8. Corps alvéolaire selon la revendication 7, dans lequel la structure de support (14, 15) est une lèvre (14) formée sur le tube de protection (2), qui entoure de préférence entièrement le tube de protection (2).

9. Corps alvéolaire selon l'une des revendications 7 ou 8, dans lequel la structure de support (14, 15) est un étrier (15) qui est relié au matériau du tube de protection (2), en particulier soudé, et qui est de préférence disposé de façon centrée sur la première surface d'extrémité (12).

10. Utilisation d'un corps alvéolaire selon l'une quelconque des revendications précédentes en tant que support pour un catalyseur destiné à effectuer une réaction catalytique dans un fluide traversant le corps alvéolaire.
